# DEMANDE DE BREVET EUROPEEN

(11) **EP 2 820 976 A2**
(43) Date de publication de la demande: **07.01.2015**
(21) Numéro de dépôt: 14173306.3
(22) Date de dépôt: 20.06.2014
(51) Int. Cl.: A47C 3/00, B60N 2/00

(54) **Simulateur de pilotage**

(30) Priorité: 05.07.2013 FR 1301607
(71) Demandeur: Bigben Interactive SA, 59818 Lesquin (FR)
(72) Inventeur: Falc, Alain, 8500 Kortrijk (BE); Allaert, Yannick, 62410 Meurchin (FR)
(74) Mandataire: Vigand, Philippe

(57) **Abrégé**

Simulateur de pilotage comprenant :
- un châssis,
- un siège réglable en position sur le châssis,
- des moyens de coulissement du siège agencés pour régler la position du siège sur le châssis selon une direction de coulissement du siège, entre deux extrémités des moyens de coulissement du siège,
caractérisé en ce que le simulateur comprend deux moyens de pivotement du siège, agencés chacun à une extrémité des moyens de coulissement du siège, pour régler une inclinaison des moyens de coulissement du siège et/ou une inclinaison du siège.

## Description

La présente invention concerne de manière générale un simulateur de pilotage destiné à être utilisé lors de la pratique de jeux vidéo de pilotage ou lors d'un entraînement simulant le pilotage d'un véhicule aérien comme un avion ou un hélicoptère, ou d'un véhicule terrestre comme une voiture de course par exemple.

Il est connu dans l'art antérieur des simulateurs de pilotage, tels que ceux décrits dans les documents US7798814 ou USD642222, où l'utilisateur peut régler la position des interfaces homme machine par rapport à l'appareil. En contrepartie, ces appareils présentent notamment l'inconvénient de ne pas être pratiques à régler, et de plus, les possibilités de réglages sont limitées. En conséquence, l'immersion de l'utilisateur est limitée s'il veut avec le même simulateur jouer à un jeu de pilotage de rallye, et ensuite jouer à un jeu de formule 1 ou a un jeu de pilotage d'hélicoptère. Les postures et position des interfaces de commande (siège, volant, pédalier, manche...) dans chacun de ces véhicules sont différentes les unes des autres et il importe de pouvoir les reproduire le plus fidèlement possible.

Un but de la présente invention est de répondre aux inconvénients des documents de l'art antérieur mentionnés ci-dessus et en particulier, tout d'abord, de proposer un simulateur de pilotage apte à reproduire différentes postures d'un pilote, chacune adaptée à un véhicule particulier, c'est-à-dire un simulateur de pilotage qui permet améliorer l'immersion de l'utilisateur en fonction du type de jeu.

Pour cela un premier aspect de l'invention concerne un simulateur de pilotage comprenant :
- un châssis,
- un siège réglable en position sur le châssis,
- des moyens de coulissement du siège agencés pour régler la position du siège sur le châssis selon une direction de coulissement du siège, entre deux extrémités des moyens de coulissement du siège,
caractérisé en ce que le simulateur comprend deux moyens de pivotement du siège, agencés chacun à une extrémité des moyens de coulissement du siège, pour régler une inclinaison des moyens de coulissement du siège et/ou une inclinaison du siège. Le simulateur selon l'invention permet de régler la position du siège suivant une direction longitudinale du simulateur avec les moyens de coulissement, mais également selon une direction verticale dès que les moyens de coulissement du siège sont inclinés, et une inclinaison du siège. De multiples positions peuvent être obtenues : en hauteur et droit comme sur un hélicoptère, bas et droit comme sur un véhicule de rallye, ou bas et incliné vers l'arrière, comme sur une monoplace telle qu'une formule 1. Les réglages sont aisés et précis, puisque l'on combine des mouvements de rotation et de coulissement qui sont indépendants les uns des autres. Ainsi, les réglages offerts permettent non seulement d'adapter le simulateur à la morphologie de l'utilisateur, mais en plus d'orienter l'inclinaison et la hauteur du siège pour reproduire un environnement particulier.

En d'autres termes, selon cette mise en oeuvre ci-dessus, les moyens de coulissement sont embarqués sur au moins l'un des moyens de pivotement, de sorte à pouvoir combiner un coulissement avec un pivotement dudit au moins un moyen de pivotement, pour obtenir un réglage de la position du siège par rapport au châssis selon une direction radiale et une direction tangentielle par rapport à un axe de rotation défini par ledit au moins un moyen de pivotement.

En résumé, chaque moyen de pivotement est relié aux moyens de coulissement, un premier moyen de pivotement est relié pour sa part au siège, et le deuxième moyen de pivotement est de son côté relié au châssis. Le premier moyen de pivotement peut faire varier un angle d'orientation entre le siège et les moyens de coulissement, et le deuxième moyen de pivotement peut faire varier un angle d'orientation entre les moyens de coulissement et le châssis. On combine ainsi les possibilités de réglage horizontal et vertical du siège, et d'inclinaison, avec seulement une glissière et deux pivots.

Selon un mode de réalisation, les deux moyens de pivotement du siège sont identiques et montés tête-bêche à chaque extrémité des moyens de coulissement du siège. La construction du simulateur est simplifiée, ainsi que la conception, puisque chaque sous ensemble de pivotement supportant les mêmes efforts, il n'y a qu'une série de calculs de résistance à effectuer. Selon un mode de réalisation :
- les moyens de coulissement du siège comprennent un rail et deux sous ensembles de coulissement du siège chacun agencé pour coulisser sur le rail,
- les deux moyens de pivotement du siège comprennent chacun une plaque interface agencée pour se fixer sur l'un du siège ou du châssis et un pivot reliant la plaque interface à l'un des deux sous ensembles de coulissement du siège et agencé pour faire pivoter la plaque interface par rapport au dit l'un des deux sous ensembles de coulissement du siège.

Selon un mode de réalisation, le simulateur comprend deux sous ensembles de verrouillage chacun agencé pour verrouiller simultanément un coulissement d'un des deux sous ensembles de coulissement du siège et un pivotement d'un des moyens de pivotement du siège. Cette mise en oeuvre permet de réaliser une économie de moyens de verrouillage en cumulant le verrouillage de deux mouvement par sous ensemble de verrouillage.

Selon un mode de réalisation, chaque sous ensemble de verrouillage comprend au moins un doigt d'indexage agencé pour se fixer dans une rainure agencée dans les moyens de coulissement du siège le long de ces derniers, chaque sous ensemble de verrouillage comprend une platine solidaire de l'un du siège ou du châssis, et la platine est pivotante par rapport aux moyens de coulissement du siège et comprend une rainure de came et des logements d'indexage agencés le long de la rainure de came pour recevoir ledit au moins un doigt d'indexage et définir plusieurs positions d'inclinaison des moyens de coulissement du siège et/ou du siège.

Selon un mode de réalisation, le simulateur comprend :
- au moins un moyen de positionnement d'une interface homme machine, réglable en position sur le châssis,
- des moyens de coulissement du dit au moins un moyen de positionnement agencés pour régler la position du dit au moins un moyen de positionnement selon une direction de coulissement du dit au moins un moyen de positionnement, entre deux extrémités des moyens de coulissement du dit au moins un moyen de positionnement,
- deux moyens de pivotement du dit au moins un moyen de positionnement, agencés chacun à une extrémité des moyens de coulissement du dit au moins un moyen de positionnement, pour régler une inclinaison des moyens de coulissement du dit au moins un moyen de positionnement et/ou une inclinaison du dit au moins un moyen de positionnement. Le simulateur selon la présente mise en oeuvre permet de régler la position du dit au moins un moyen de positionnement suivant une direction longitudinale du simulateur avec les moyens de coulissement du dit au moins un moyen de positionnement, mais également selon une direction verticale dès que les moyens de coulissement du dit au moins un moyen de positionnement sont inclinés, et une inclinaison du dit au moins un moyen de positionnement. De multiples positions peuvent être obtenues et les réglages sont aisés et précis, puisque l'on combine des mouvements de rotation et de coulissement qui sont indépendants les uns des autres. On peut envisager d'utiliser les moyens de positionnement pour positionner un volant, un pédalier, un manche à balai, un levier de vitesse. Bien entendu, on peut avoir plusieurs moyens de positionnement sur le simulateur.

On peut envisager de réaliser les moyens de positionnement avec une platine et des moyens de maintien en position tels que de pinces de serrage de l'interface homme machine. Dans ce cas, les moyens de positionnement sont standard et permettent à l'utilisateur d'utiliser un type précis d'interface homme machine, pour améliorer l'immersion selon les désirs de l'utilisateur.

On peut envisager d'utiliser les moyens de positionnement pour positionner et maintenir en position des organes du simulateur de pilotage, tels que des écrans d'affichage, des enceintes. Ainsi, l'utilisateur peut également régler leur position sur le châssis.

Selon un mode de réalisation, les deux moyens de pivotement du dit au moins un moyen de positionnement sont identiques et montés tête-bêche à chaque extrémité des moyens de coulissement du dit au moins un moyen de positionnement.

Selon un mode de réalisation :
- les moyens de coulissement du dit au moins un moyen de positionnement comprennent un deuxième rail et deux sous ensembles de coulissement du dit au moins un moyen de positionnement chacun agencé pour coulisser sur le deuxième rail,
- les deux moyens de pivotement du dit au moins un moyen de positionnement comprennent chacun une deuxième plaque interface agencée pour se fixer sur l'un du dit au moins un moyen de positionnement ou du châssis, et un deuxième pivot reliant la deuxième plaque interface à l'un deux sous ensembles de coulissement du dit au moins un moyen de positionnement et agencé pour les faire pivoter l'un par rapport à l'autre.

Selon un mode de réalisation, le simulateur comprend deux sous ensembles de verrouillage du dit au moins un moyen de positionnement chacun agencé pour verrouiller simultanément un coulissement d'un des sous ensembles de coulissement du dit au moins un moyen de positionnement et un pivotement d'un des moyens de pivotement du dit au moins un moyen de positionnement.

Selon un mode de réalisation, le châssis comprend au moins un troisième rail longitudinal avec des moyens de fixation agencés le long du troisième rail, de sorte à pouvoir régler une position longitudinale du siège et/ou d'accessoires et/ou d'interfaces homme machine, le long dudit au moins un troisième rail. La position longitudinale de tous les organes du siège peut être modulée et adaptée, y compris les moyens de coulissement ou de pivotement de l'un ou l'autre des organes du simulateur de pilotage.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue latérale d'un simulateur de pilotage selon l'invention, réglé dans une première configuration d'utilisation ;
- la figure 2 représente le simulateur de la figure 1 dans une autre configuration d'utilisation.

Par définition, on entendra que le siège mentionné ici comprend une assise et un dossier.

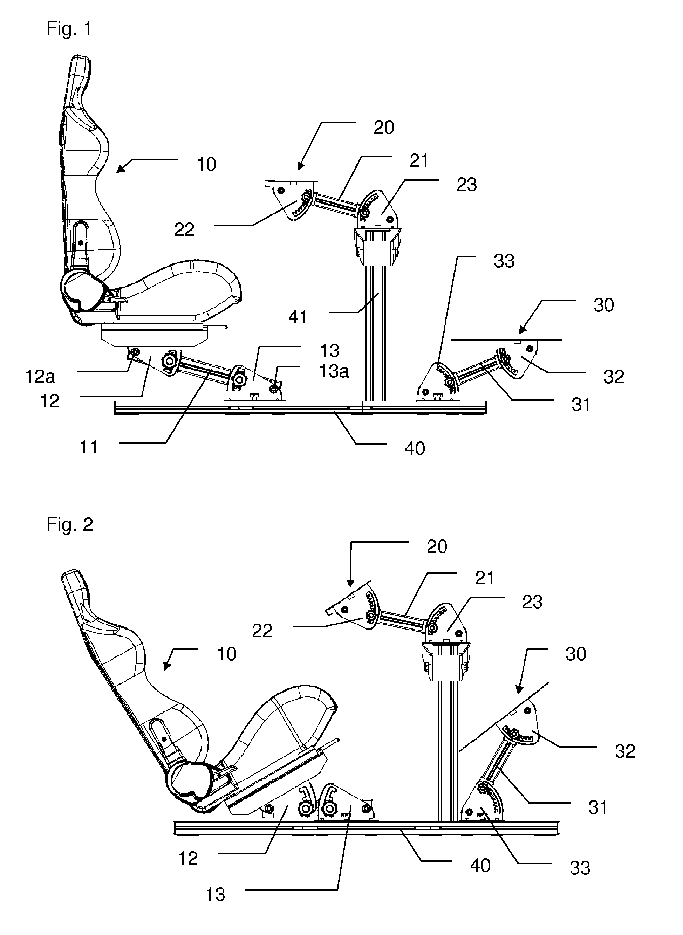

La figure 1 représente un simulateur de pilotage comprenant un siège 10, une platine support de volant 20, et une platine support de pédalier 30. Un châssis 40 forme un socle à poser sur le sol, un rectangle par exemple. Le châssis 40 peut être réalisé à partir de profilés de section en forme de parallélogramme, en carré ou en rectangle. Ces profilés peuvent avantageusement présenter des rainures de fixation en T ou queue d'aronde pour permettre d'attacher des organes du simulateur de pilotage. Par exemple, la platine support volant 20 est fixée sur le châssis 40 par l'intermédiaire d'une arche 41 dont la position longitudinale peut être facilement réglée en faisant coulisser l'arche 41 le long des rainures de fixation longitudinales du châssis 40. On peut envisager d'utiliser des profilés en alliage léger, tel que de l'aluminium par exemple.

Le siège 10 est relié au châssis 40 par l'intermédiaire d'un rail de coulissement siège 11 et de deux sous ensembles de pivotement siège 12 et 13. Chaque sous ensemble de pivotement 12 et 13 est monté à une extrémité du rail de coulissement siège 11, en disposition tête-bêche l'un par rapport à l'autre.

Chaque sous ensemble de pivotement siège 12 et 13 comprend un pivot 12a et 13a respectivement, ainsi qu'au moins un platine verticale comprenant une rainure en arc de cercle de centre l'axe du pivot 12a ou 13a. Des boutons de commande sont montés dans les rainures, pour se visser dans une rainure longitudinale du rail de coulissement siège 11 afin de verrouiller en position des éléments entre eux. Non visible sur cette figure, des étriers sont solidaires des pivots 12a et 13a et permettent un coulissement sur le rail de coulissement siège 11.

Les boutons de commandes verrouillent simultanément les mouvements en rotation et en coulissement de chaque sous ensemble de pivotement et de leurs étriers respectifs.

On comprend donc que le siège 10 peut être déplacé selon la direction du rail de coulissement siège, mais également en rotation grâce au sous ensemble de pivotement 12, et en hauteur grâce à un réglage simultané du pivotement des deux sous ensembles de pivotement siège 12 et 13, avec un coulissement le long du rail de coulissement siège 11.

Le principe de réglage de la position de la platine support volant 20 est le même avec les deux sous ensembles de pivotement volant 22 et 23, qui peuvent coulisser sur le rail de coulissement volant 21 par l'intermédiaire d'étriers non visibles sur cette figure.

De manière similaire, la platine de support pédalier 30 peut être réglée en position par l'intermédiaire de deux sous ensembles de pivotement pédalier 32 et 33, qui peuvent coulisser sur le rail de coulissement pédalier 31 par l'intermédiaire d'étriers non visibles sur cette figure.

Tel que représenté, à la figure 1, le simulateur de pilotage est réglé pour reproduire la posture d'un pilote d'une voiture de rallye par exemple.

La figure 2 représente le simulateur de pilotage de la figure 1, mais configuré pour reproduire la posture d'un pilote de monoplace du type formule 1 par exemple.

A cet effet, le siège 10 a été incliné vers l'arrière et son assise rapprochée de la platine support volant 20, et la platine support pédalier 30 a été surélevée et inclinée vers le siège 10.

Il est à noter que les sous ensembles de pivotement volant 22 et 23 peuvent être les mêmes que les sous ensembles de pivotement pédalier 32 et 33, car les efforts à supporter sont similaires.

De plus, sur la figure 2, on aperçoit les rainures en arc de cercle agencées sur les plaques verticales des sous ensembles de pivotement 12 et 13. On aperçoit également des évidements effectués selon une direction radiale, afin de former des logements dans lesquels les boutons de commande peuvent se loger, pour entrer en butée avec les plaques verticales, pour sécuriser le maintien en position des organes du simulateur de pilotage.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à des profilés rainurés pour régler la position des organes le long du châssis, mais on peut envisager d'utiliser des tubes avec des brides de fixation par exemple.

## Revendications

1. Simulateur de pilotage comprenant :
- un châssis (40),
- un siège (10) réglable en position sur le châssis (40),
- des moyens de coulissement du siège agencés pour régler la position du siège (10) sur le châssis (40) selon une direction de coulissement du siège (10), entre deux extrémités des moyens de coulissement du siège, **caractérisé en ce que** le simulateur comprend deux moyens de pivotement du siège (12, 13), agencés chacun à une extrémité des moyens de coulissement du siège, pour régler une inclinaison des moyens de coulissement du siège et/ou une inclinaison du siège (10).

2. Simulateur de pilotage selon la revendication précédente, caractérisé les deux moyens de pivotement du siège (12, 13) sont identiques et montés tête-bêche à chaque extrémité des moyens de coulissement du siège.

3. Simulateur de pilotage selon l'une des revendications précédentes, **caractérisé en ce que** :
- les moyens de coulissement du siège comprennent un rail et deux sous ensembles de coulissement du siège chacun agencé pour coulisser sur le rail,
- les deux moyens de pivotement du siège (12, 13) comprennent chacun une plaque interface agencée pour se fixer sur l'un du siège (10) ou du châssis (40) et un pivot (12a, 13a) reliant la plaque interface à l'un des deux sous ensembles de coulissement du siège et agencé pour faire pivoter la plaque interface par rapport au dit l'un des deux sous ensembles de coulissement du siège.

4. Simulateur de pilotage selon la revendication précédente, **caractérisé en ce qu'**il comprend deux sous ensembles de verrouillage chacun agencé pour verrouiller simultanément un coulissement d'un des deux sous ensembles de coulissement du siège et un pivotement d'un des moyens de pivotement du siège (12, 13).

5. Simulateur de pilotage selon la revendication précédente, **caractérisé en ce que** chaque sous ensemble de verrouillage comprend au moins un doigt d'indexage agencé pour se fixer dans une rainure agencée dans les moyens de coulissement du siège le long de ces derniers, **en ce que** chaque sous ensemble de verrouillage comprend une platine solidaire de l'un du siège (10) ou du châssis (40), et **en ce que** la platine est pivotante par rapport aux moyens de coulissement du siège et comprend une rainure de came et des logements d'indexage agencés le long de la rainure de came pour recevoir ledit au moins un doigt d'indexage et définir plusieurs positions d'inclinaison des moyens de coulissement du siège et/ou du siège (10).

6. Simulateur de pilotage selon l'une des revendications précédentes, **caractérisé en ce qu'**il comprend :
- au moins un moyen de positionnement d'une interface homme machine, réglable en position sur le châssis (40),
- des moyens de coulissement du dit au moins un moyen de positionnement agencés pour régler la position du dit au moins un moyen de positionnement selon une direction de coulissement du dit au moins un moyen de positionnement, entre deux extrémités des moyens de coulissement du dit au moins un moyen de positionnement,
- deux moyens de pivotement du dit au moins un moyen de positionnement, agencés chacun à une extrémité des moyens de coulissement du dit au moins un moyen de positionnement, pour régler une inclinaison des moyens de coulissement du dit au moins un moyen de positionnement et/ou une inclinaison du dit au moins un moyen de positionnement.

7. Simulateur de pilotage selon la revendication précédente, **caractérisé en ce que** les deux moyens de pivotement du dit au moins un moyen de positionnement sont identiques et montés tête-bêche à chaque extrémité des moyens de coulissement du dit au moins un moyen de positionnement.

8. Simulateur de pilotage selon l'une des revendications 6 ou 7, **caractérisé en ce que** :
- les moyens de coulissement du dit au moins un moyen de positionnement comprennent un deuxième rail et deux sous ensembles de coulissement du dit au moins un moyen de positionnement chacun agencé pour coulisser sur le deuxième rail,
- les deux moyens de pivotement du dit au moins un moyen de positionnement comprennent chacun une deuxième plaque interface agencée pour se fixer sur l'un du dit au moins un moyen de positionnement ou du châssis (40), et un deuxième pivot reliant la deuxième plaque interface à l'un deux sous ensembles de coulissement du dit au moins un moyen de positionnement et agencé pour les faire pivoter l'un par rapport à l'autre.

9. Simulateur de pilotage selon la revendication précédente, **caractérisé en ce que** le simulateur comprend deux sous ensembles de verrouillage du dit au moins un moyen de positionnement chacun agencé pour verrouiller simultanément un coulissement d'un des sous ensembles de coulissement du dit au moins un moyen de positionnement et un pivotement d'un des moyens de pivotement du dit au moins un moyen de positionnement.

10. Simulateur de pilotage selon l'une des revendications précédentes, **caractérisé en ce que** le châssis (40) comprend au moins un troisième rail longitudinal avec des moyens de fixation agencés le long du troisième rail, de sorte à pouvoir régler une position longitudinale du siège (10) et/ou d'accessoires et/ou d'interfaces homme machine, le long dudit au moins un troisième rail.
